(19) Europäisches Patentamt / European Patent Office / Office européen des brevets

(11) **EP 2 227 755 B1**

## (12) FASCICULE DE BREVET EUROPEEN

(45) Date de publication et mention
de la délivrance du brevet:
**03.08.2011 Bulletin 2011/31**

(21) Numéro de dépôt: **08863414.2**

(22) Date de dépôt: **15.12.2008**

(51) Int Cl.:
**G06F 17/30** *(2006.01)*        **G06F 21/00** *(2006.01)*

(86) Numéro de dépôt international:
**PCT/FR2008/052305**

(87) Numéro de publication internationale:
**WO 2009/081016 (02.07.2009 Gazette 2009/27)**

(54) **PROCEDE D'ANALYSE D'UN CONTENU MULTIMEDIA, PRODUIT PROGRAMME D'ORDINATEUR ET DISPOSITIF D'ANALYSE CORRESPONDANTS**

VERFAHREN ZUR ANALYSE VON EIN TEIL VON MULTIMEDIA-INHALTEN UND ENTSPRECHENDEN COMPUTER SOFTWARE PRODUKT-UND-ANALYSE-GERÄT

METHOD FOR ANALYSING A PIECE OF MULTIMEDIA CONTENT AND CORRESPONDING COMPUTER SOFTWARE PRODUCT AND ANALYSIS DEVICE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **24.12.2007 FR 0760350**

(43) Date de publication de la demande:
**15.09.2010 Bulletin 2010/37**

(73) Titulaire: **FRANCE TELECOM**
**75015 Paris (FR)**

(72) Inventeurs:
• **GENGEMBRE, Nicolas**
**F-35470 Plechatel (FR)**
• **BERRANI, Sid Ahmed**
**F-35700 Rennes (FR)**

(74) Mandataire: **Guy, Marion**
**Cabinet Vidon**
**Technopôle Atalante**
**16B rue de Jouanet**
**35703 Rennes Cedex 7 (FR)**

(56) Documents cités:
• **JOLY A ET AL: "Statistical similarity search applied to content-based video copy detection" ICDE 2005, 5 avril 2005 (2005-04-05), pages 1-10, XP010924066 cité dans la demande**

• **GOUET-BRUNET V ET AL: "Object recognition and segmentation in videos by connecting heterogeneous visual features" COMPUTER VISION AND IMAGE UNDERSTANDING, ACADEMIC PRESS, US, vol. 111, no. 1, 1 février 2008 (2008-02-01), pages 86-109, XP022699273 ISSN: 1077-3142 [extrait le 2008-02-01]**
• **BERRANI S.-A. ET AL: "Robust Content-based Image Searches for Copyright Protection" MMDB 2003, 7 novembre 2003 (2003-11-07), pages 70-77, XP008095170 New Orleans, Louisiana, USA**
• **CHIH-YI CHIU ET AL: "Efficient and Effective Video Copy Detection Based on Spatiotemporal Analysis" 20071201, 1 décembre 2007 (2007-12-01), pages 202-209, XP031197373**
• **CHIH-YI CHIU ET AL: "Efficient Histogram-Based Indexing for Video Copy Detection" MULTIMEDIA WORKSHOPS, 2007. ISMW '07. NINTH IEEE INTERNATIONAL SYMPOSIUM ON, IEEE, PISCATAWAY, NJ, USA, 10 décembre 2007 (2007-12-10), pages 265-270, XP031239169**

• GENGEMBRE N ET AL: "A Probabilistic Framework for Fusing Frame-based Searches within a Video Copy Detection System" PROC. OF THE ACM INTERNATIONAL CONFERENCE ON IMAGE AND VIDEO RETRIEVAL, [Online] 7 juillet 2008 (2008-07-07), - 9 juillet 2008 (2008-07-09) pages 211-220, XP002491420 Niagara Falls, Canada Extrait de l'Internet: URL: http://delivery.acm.org/10.1145/139000 0/1386384/p211-gengembre.pdf? key1=1386384& key2=2856018121&coll=ACM&dl=ACM&CFID=3 7205 458&CFTOKEN=54625682> [extrait le 2008-08-07]

**Description**

**1. Domaine de l'invention**

Le domaine de l'invention est celui de la transmission ou de l'échange de contenus multimédia. Plus précisément, l'invention concerne l'analyse et le contrôle de tels contenus, en vue notamment de la détection de copies d'un contenu référencé (par exemple de copies illicites d'un contenu protégé).

**2. Art antérieur**

*2.1 Détection de copies illicites*

L'avènement du haut débit offert par l'ADSL a induit l'émergence de nouveaux services permettant une consommation facilitée du contenu multimédia, comme les services de vidéo à la demande.

Les fournisseurs historiques, comme France Télévision, TF1, Gaumont, etc (marques déposées) ainsi que d'autres acteurs issus du monde des télécoms, comme Orange, Neuf, Free, etc (marques déposées), des moteurs de recherche comme Google video, Yahoo video, etc (marques déposées) ou encore des sociétés spécialisées comme vodeo.fr, glowria, blinkx, TVEyes, skouk, etc (marques déposées), proposent ainsi en ligne une partie de leur catalogue vidéo. Les contenus multimédia proposés par ces services sont protégés, et soumis par exemple à un paiement pour pouvoir les télécharger.

Par ailleurs, le développement récent des sites d'échange de contenus multimédia tels que YouTube, DailyMotion, MySpace, etc (marques déposées) met en évidence l'existence d'une seconde source de contenus multimédia. Ces contenus multimédia proviennent des utilisateurs eux-mêmes. Malheureusement, bien qu'une partie des contenus observés sur ces sites d'échanges provienne de contenus réellement créés par les utilisateurs, une autre partie est constituée de contenus illégalement proposés au téléchargement.

Il est donc souhaitable de pouvoir détecter les copies illicites d'un contenu protégé.

Plus précisément, la détection de copies vidéo permet :

- d'identifier les contenus référencés en catalogue, c'est-à-dire référencés dans une base de référence, afin de détecter les copies illicites des contenus de référence ;
- de relever les contenus fortement copiés (dé-doublonnage) afin de déceler les contenus générateurs d'audience, ou de limiter les tailles de stockage.

Une telle détection doit pouvoir prendre en compte les altérations usuelles que peut subir un contenu dans ce contexte : forte compression, ré-échantillonnage, recadrage, mais aussi incrustation de texte, logos, projections filmées (en anglais « camcording »), etc. En effet, un contenu copié subit généralement des transformations intentionnelles, afin de le rendre difficilement détectable, ainsi que des transformations non-intentionnelles, dues à l'enregistrement du contenu, à son transcodage, ou encore à des contraintes éditoriales lors de sa republication.

Classiquement, la détection de copies de documents multimédia (images, sons, vidéos, etc) consiste à rechercher la présence ou non d'un document requête « suspect » dans une base de documents protégés. Une telle technique repose sur deux aspects essentiels :

- la description du contenu visuel du document vidéo, i.e. les descripteurs utilisés ;
- la technique d'indexation des descripteurs, i.e. la méthode utilisée pour structurer la base des descripteurs des documents protégés, qui permet d'exécuter efficacement des recherches.

*2.2 Descripteurs de contenus*

Classiquement, les descripteurs des documents sont des vecteurs numériques de grande dimension auxquels est associée une mesure de similarité (souvent une distance). Cette mesure de similarité permet de quantifier la ressemblance entre deux documents en mesurant la proximité entre leurs descripteurs. En particulier, ces descripteurs doivent être robustes aux altérations des documents.

Dans le domaine de l'analyse de contenus vidéo, on utilise principalement une description basée sur les images clés. Cette technique consiste à sélectionner à partir du contenu vidéo un sous-ensemble d'images, appelées images clés, et de décrire ces images clés. On distingue deux approches :

- les approches locales : à partir de chaque image clé, un ensemble de points d'intérêt est sélectionné dans l'image. Un descripteur est ensuite calculé autour de chaque point d'intérêt ;

- les approches globales : chaque image clé est décrite dans son ensemble en calculant un seul descripteur.

La détection de copies vidéo correspond donc à une détection de copies d'images provenant d'une même source vidéo dans un ordre temporel cohérent. Autrement dit, mettre en correspondance un document vidéo copié avec le document vidéo original, revient à mettre en correspondance les descripteurs des images clés des deux documents en vérifiant la cohérence temporelle des images mises clés en correspondance. Cette approche est notamment décrite dans le document « Statistical similarity search applied to content-based video copy detection ») de A. Joly et al (icdew, p. 1285, 21st International Conference on Data Engineering Workshops (ICDEW'05), 2005).

La plupart des techniques d'analyse d'un contenu multimédia utilise une description locale basée points d'intérêt pour la description des images clés, considérant que les descripteurs locaux sont plus robustes que les descripteurs globaux. De plus, l'information décrivant le contenu multimédia est répartie en différentes régions de l'image. Par conséquent, l'altération de certaines de ces régions (par exemple lors de l'incrustation d'un logo dans une image, ou encore lors du rognage de l'image, en anglais « cropping ») n'affecte pas les autres régions qui permettent d'identifier le document.

Ces descripteurs locaux sont très coûteux à la fois en stockage et en temps d'exécution des requêtes. En effet, la description d'une image par plusieurs descripteurs multiplie d'autant la taille de la base des descripteurs par rapport à un schéma de descripteurs globaux d'une part, et augmente le coût d'une recherche d'autre part. En effet, pour retrouver l'image originale d'une image requête, il est nécessaire de rechercher les descripteurs similaires à chacun des descripteurs locaux de l'image requête puis d'intégrer l'ensemble des résultats.

Le problème du coût de la recherche affecte également les techniques de description globale, notamment quand la taille de la base des descripteurs des contenus protégés est volumineuse.

Par ailleurs, la prise en compte de la cohérence temporelle des images clés ne peut être mise en oeuvre qu'après traitement du contenu suspect entier, ou d'un certain nombre (fixé arbitrairement) de ses images clés.

**3. Exposé de l'invention**

L'invention propose une solution nouvelle qui ne présente pas ces inconvénients de l'art antérieur, sous la forme d'un procédé d'analyse d'un contenu multimédia, constitué d'une succession temporelle d'entités élémentaires, visant à vérifier si le contenu multimédia comprend ou non au moins une portion d'au moins un contenu de référence référencés dans une base de contenus de référence.

Selon l'invention, un tel procédé d'analyse comprend les étapes suivantes, pour au moins une entité élémentaire du contenu multimédia à analyser sélectionnée selon une règle de sélection prédéterminée, dite entité élémentaire courante :

- affectation d'une probabilité de vraisemblance à chaque entité élémentaire d'un ensemble d'entités élémentaires candidates courantes, ladite probabilité de vraisemblance tenant compte d'une similarité entre ladite entité élémentaire candidate et ladite entité élémentaire courante dudit contenu multimédia ;
- affectation d'une probabilité de transition entre la ou lesdites entités élémentaires candidates courantes et au moins une entité élémentaire candidate précédente ;
- affectation d'une probabilité d'identification d'au moins un scénario composé d'une succession temporelle d'entités élémentaires candidates, tenant compte :

  • des probabilités de vraisemblance affectées aux entités élémentaires candidates dudit scénario ; et
  • des probabilités de transition affectées aux entités élémentaires candidates dudit scénario ;

- décision de reconnaissance d'un desdits contenus de référence et/ou de poursuite de l'analyse à l'aide d'une entité élémentaire suivante dudit contenu multimédia, en fonction de ladite probabilité d'identification.

L'invention propose ainsi une solution nouvelle et inventive basée sur une approche probabiliste, permettant notamment de détecter à la volée, c'est-à-dire lors de la lecture ou de l'analyse du contenu multimédia, s'il contient des contenus ou des portions de contenus référencés dans une base de référence.

En particulier, la probabilité d'identification d'un scénario ne tient pas compte uniquement de la similarité d'une entité élémentaire à un instant donné (grâce à la probabilité de vraisemblance), mais prend également en considération les entités élémentaires similaires précédentes, grâce à la prise en compte de probabilités de transition.

Cette approche permet d'effectuer l'analyse d'un contenu multimédia en temps réel, sans attendre que l'ensemble du contenu soit traité. En effet, si la probabilité de transition est forte et que la vraisemblance de l'entité élémentaire courante confirme cette transition, la décision de reconnaissance peut être validée. Ainsi, il n'est pas nécessaire d'analyser le contenu multimédia suspect en entier pour détecter d'éventuelles copies présentes dans ce contenu.

L'invention permet également d'effectuer l'analyse a posteriori si l'application visée ne nécessite pas de prise de décision à la volée.

Par exemple, la décision de reconnaissance peut être prise lorsque la probabilité d'identification d'un scénario, ou d'un sous ensemble de celui-ci est supérieure à un seuil prédéterminé.

Certaines entités élémentaires du contenu multimédia à analyser sont donc sélectionnées selon une règle de sélection prédéterminée : par exemple, on sélectionne une entité élémentaire régulièrement (toutes les cinq entités élémentaires).

Ces entités élémentaires correspondent par exemple à des images si le contenu multimédia à analyser est un contenu vidéo, ou des trames audio si le contenu multimédia à analyser est un contenu audio.

En particulier, les entités élémentaires candidates appartiennent au groupe comprenant :

- une entité élémentaire appartenant à un desdits contenus de référence et
- une entité élémentaire représentative d'un contenu dit « libre », non référencé dans ladite base de référence.

Autrement dit, l'étape d'affectation d'une probabilité de vraisemblance peut affecter une probabilité à une entité élémentaire candidate appartenant à un des contenus de référence et/ou à une entité élémentaire candidate appartenant à un contenu non référencé dans la base de référence.

De même, l'étape d'affectation d'une probabilité de transition peut tenir compte d'entités élémentaires appartenant ou non à un contenu de référence.

Par conséquent, un scénario, qui est composé par définition d'une succession temporelle d'entités élémentaires candidates, peut comprendre à la fois des entités élémentaires appartenant à un contenu de référence et des entités élémentaires appartenant à un contenu libre.

On maintient ainsi selon l'invention des hypothèses de détection non prépondérantes a priori mais qui pourraient le devenir ensuite.

En particulier, l'étape de décision de reconnaissance reconnaît au moins une portion d'un des contenus de référence ou le contenu libre.

Ainsi, lors de l'analyse du contenu multimédia, il est possible de détecter qu'une portion du contenu à analyser correspond à un contenu non référencé, alors qu'une autre portion du contenu à analyser correspond à un contenu référencé.

Selon un aspect particulier de l'invention, l'étape d'affectation d'une probabilité de vraisemblance tient compte d'une comparaison entre un descripteur de l'entité élémentaire courante et un descripteur de l'entité élémentaire candidate.

Un tel descripteur comprend par exemple un unique descripteur global, décrivant l'ensemble de l'entité élémentaire, ou une pluralité de descripteurs locaux, décrivant chacun une partie de l'entité élémentaire.

Par exemple, si le contenu multimédia est un contenu vidéo, le descripteur global décrit l'image à laquelle il est associé, et les descripteurs locaux décrivent chacun des points d'intérêt de l'image. Ces descripteurs prennent par exemple la forme d'histogrammes de couleur, d'histogrammes de contour, etc.

Si le contenu multimédia est un contenu audio, les descripteurs sont par exemple des coefficients cepstraux (par exemple MFCC, en anglais « Mel frequency cepstral coefficient ») calculés sur des trames audio.

Selon une caractéristique particulière de l'invention, l'étape d'affectation d'une probabilité de transition affecte à chaque entité élémentaire candidate courante une probabilité appartenant au groupe comprenant :

- une première probabilité de transition (Pc) que l'entité élémentaire candidate courante et une entité élémentaire candidate précédente appartiennent à un même contenu de référence;
- une deuxième probabilité de transition ($P_0$) que l'entité élémentaire candidate courante et une entité élémentaire candidate précédente appartiennent à des contenus de référence différents ;
- une troisième probabilité de transition (Pnc) que l'entité élémentaire candidate courante appartienne à un contenu libre, non référencé dans la base de référence, et une entité élémentaire candidate précédente appartienne à un contenu de référence ;
- une quatrième probabilité de transition (Pcnc) que l'entité élémentaire candidate courante et une entité élémentaire candidate précédente appartiennent à un contenu libre, non référencé dans la base de référence ;
- une cinquième probabilité de transition que l'entité élémentaire candidate courante appartienne à un contenu de référence et une entité élémentaire candidate précédente appartienne à un contenu libre, non référencé dans la base de référence.

Par exemple, la première probabilité de transition est supérieure ou égale à la troisième probabilité de transition, elle-même supérieure ou égale à la deuxième probabilité de transition.

Une telle répartition des probabilités de transition confère de bonnes performances.

Selon un autre aspect de l'invention, les scénarios sont représentés sous la forme d'un arbre associant à chacune des entités élémentaires candidates courantes l'ensemble des entités élémentaires candidates précédentes, l'étape d'affectation d'une probabilité de vraisemblance affectant une probabilité de vraisemblance à chacun des noeuds de l'arbre, et

l'étape d'affectation d'une probabilité de transition affectant une probabilité de transition à chacune des branches de l'arbre.

Un scénario, qui est composé d'une succession temporelle d'entités élémentaires candidates, définit donc un parcours cohérent dans l'arbre, d'un noeud racine vers une extrémité de l'arbre. La probabilité d'identification d'un scénario correspond alors au produit des probabilités de vraisemblance affectées aux différents noeuds et des probabilités de transition affectées aux différentes branches composant le scénario.

Selon une autre caractéristique de l'invention, le procédé d'analyse comprend une étape de sélection d'un sous-ensemble de scénarios les plus probables.

Par exemple, l'étape de sélection sélectionne les scénarios présentant une probabilité d'identification supérieure à un seuil prédéterminé (par exemple supérieure à 0,75).

Selon une variante, l'étape de sélection sélectionne les N scénarios présentant les probabilités d'identification les plus élevés, avec N un entier positif (par exemple N = 20).

Il est également possible de diminuer le nombre de scénarios envisagés en ne conservant, pour une entité élémentaire courante, que les entités élémentaires candidates courantes appartenant à un contenu référencé identifié par une entité élémentaire candidate précédente, ainsi que les entités élémentaires candidates courantes appartenant à un contenu non référencé.

En particulier, l'étape de décision de reconnaissance reconnaît une portion d'un des contenus de référence ou d'un contenu libre lorsque la partie correspondante dudit arbre comprend une branche unique.

Autrement dit, lorsque tous les scénarios partagent une branche commune entre deux entités élémentaires candidates successives, on considère que le contenu (de référence ou libre) identifié aux extrémités de cette branche est reconnu.

En particulier, cette décision de reconnaissance peut être faite en différé, après analyse de l'ensemble du contenu considéré, ou bien à la volée, c'est-à-dire en temps réel, dés qu'une branche unique est détectée.

Par exemple, si le traitement est différé, on peut utiliser un algorithme de Viterbi pour déterminer le scénario le plus probable.

Un tel procédé d'analyse peut être mis en oeuvre dans un module de fusion. Un tel module de fusion permet notamment de tirer parti de la cohérence temporelle attendue entre les résultats de recherches successives correspondant à des entités élémentaires consécutives.

Un autre mode de réalisation de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'analyse décrit précédemment.

Un autre aspect de l'invention concerne un dispositif d'analyse d'un contenu multimédia, constitué d'une succession temporelle d'entités élémentaires, permettant de vérifier si ledit contenu multimédia comprend ou non au moins une portion d'au moins un contenu de référence référencé dans une base de contenus de référence.

Selon l'invention, un tel dispositif comprend, pour au moins une entité élémentaire du contenu multimédia à analyser sélectionnée selon une règle de sélection prédéterminée, dite entité élémentaire courante :

- des moyens d'affectation d'une probabilité de vraisemblance à chaque entité élémentaire d'un ensemble d'entités élémentaires candidates courantes, ladite probabilité de vraisemblance tenant compte d'une similarité entre ladite entité élémentaire candidate et ladite entité élémentaire courante dudit contenu multimédia ;
- des moyens d'affectation d'une probabilité de transition entre la ou lesdites entités élémentaires candidates courantes et au moins une entité élémentaire candidate précédente ;
- des moyens d'affectation d'une probabilité d'identification d'au moins un scénario composé d'une succession temporelle d'entités élémentaires candidates, tenant compte :

  • des probabilités de vraisemblance affectées aux entités élémentaires candidates dudit scénario ; et
  • des probabilités de transition affectées aux entités élémentaires candidates dudit scénario ;

- des moyens de décision de reconnaissance d'un desdits contenus de référence et/ou de poursuite de l'analyse à l'aide d'une entité élémentaire suivante dudit contenu multimédia, en fonction de ladite probabilité d'identification.

Un tel dispositif d'analyse est notamment adapté à mettre en oeuvre le procédé d'analyse décrit précédemment. Il s'agit par exemple d'un serveur d'analyse, permettant l'échange ou le téléchargement de contenus multimédia.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 présente le principe général de l'analyse d'un contenu multimédia ;
- la figure 2 illustre les principales étapes du procédé d'analyse selon l'invention ;
- la figure 3 illustre la structure d'un contenu vidéo à analyser ;
- les figures 4A et 4B présentent, sous forme d'arbre, les différents scénarios envisageables lors de l'analyse d'un contenu multimédia ;
- la figure 5 propose un exemple de résultat d'analyse d'un contenu multimédia ;
- la figure 6 présente la structure d'un dispositif d'analyse mettant en oeuvre une technique d'analyse d'un contenu multimédia selon l'invention.

## 5. Description d'un mode de réalisation de l'invention

### 5.1 Principe général

Le principe général de l'invention repose sur l'utilisation d'une approche probabiliste pour analyser un contenu multimédia, c'est-à-dire pour vérifier si ce contenu multimédia comprend ou ne comprend pas des contenus référencés dans une base de référence, ou des portions de ces contenus de référence.

Plus précisément, l'invention propose de formuler des hypothèses, encore appelées scénarios, sur la présence et l'identité d'un contenu de référence dans un contenu multimédia à analyser, ceci éventuellement au fur et à mesure de la lecture du contenu multimédia. La probabilité des différentes hypothèses envisagées est calculée et mise à jour lors de la prise en compte d'une nouvelle entité élémentaire sélectionnée du contenu multimédia. Certaines hypothèses sont confirmées et d'autres infirmées à chaque nouvelle entité élémentaire sélectionnée, seules les plus probables étant conservées.

Par exemple, cette approche probabiliste permet de contrôler les contenus multimédia mis à disposition des utilisateurs sur un serveur, en détectant de manière efficace la présence de copies d'un ou plusieurs contenus de référence au sein d'un contenu multimédia, au fur et à mesure de la lecture de ce contenu multimédia.

En particulier, la présente invention permet d'identifier une copie intégrale dans le contenu multimédia contrôlé avant lecture complète de celui-ci (par exemple, la vidéo analysée est une copie d'une vidéo entière protégée), ou d'identifier à la volée un segment extrait d'un contenu de référence, et de connaître le début et la fin précis du segment copié dans le flux analysé après quelques instants de lecture seulement.

L'invention peut ainsi s'intégrer dans un système automatique de protection des droits d'auteurs. Elle permet par exemple à une plateforme d'échange de contenus, tels que Youtube, MaZoneVidéo, Dailymotion, etc (marques déposées) d'intervenir très en amont du processus de dépôt de contenus multimédia (image, audio ou vidéo) en filtrant les documents illicites déposés, et de se mettre ainsi en conformité avec les règles de protection des droits d'auteurs. En effet, il est possible selon la technique proposée de commencer la vérification d'un contenu dès le début de son chargement sur une plateforme d'échange, ce qui permet par exemple de préserver des ressources réseau en interrompant le dépôt de la vidéo si celle-ci est reconnue comme une copie illicite.

Par ailleurs, et toujours dans le contexte des plateformes d'échanges de contenus, un tel système peut être utilisé pour détecter les multiples copies d'un même document référencé dans une base du serveur. En effet, un même document est en général chargé par plusieurs utilisateurs avec des noms et des descriptions textuelles différentes. Une technique d'analyse selon l'invention peut ainsi être appliquée pour supprimer les doublons dans la base. On présente ainsi à l'utilisateur une occurrence unique de chaque document (éventuellement avec un lien vers les autres copies).

L'invention peut également être utilisée à des fins d'analyse et de pige pour du contenu dont la diffusion est autorisée mais dont on souhaite connaître l'audience.

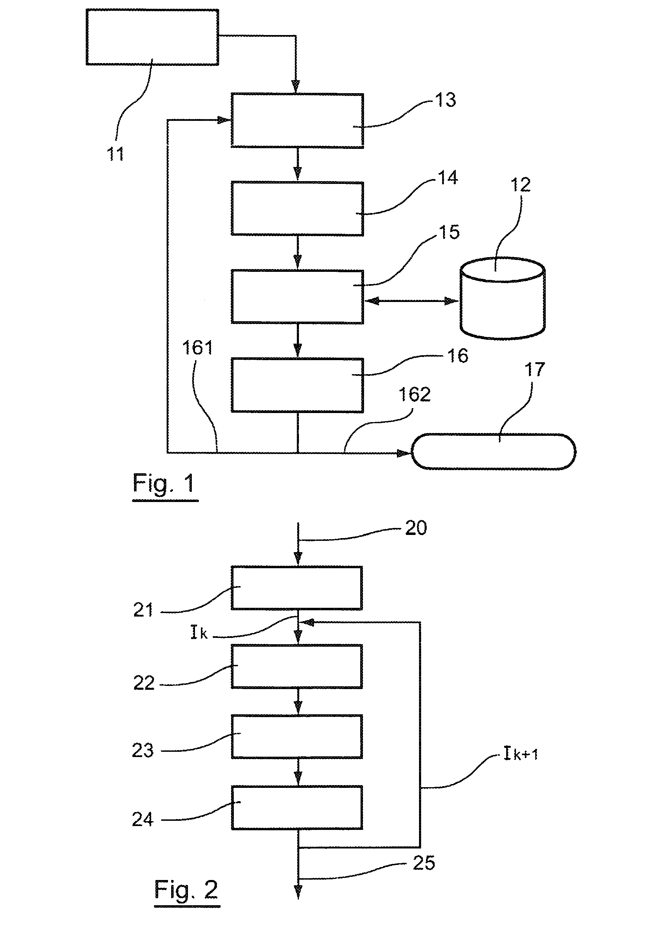

La figure 1 illustre plus précisément le principe général de l'analyse d'un contenu multimédia, permettant de vérifier si un contenu multimédia 11, organisé en entités élémentaires successives, comprend au moins une portion de l'un au moins des contenus de référence référencés dans une base de référence 12.

On considère par exemple que l'on cherche à analyser un contenu vidéo 11, dans lequel les entités élémentaires successives correspondent à des images, et que les contenus de référence référencés dans la base 12 sont des contenus vidéo de référence, dans lesquels les entités élémentaires successives correspondent également à des images.

On considère également que des images clés ont été calculées sur les contenus de référence de la base de référence 12. Ces images clés sont indexées dans une base d'images fixes par une méthode d'indexation classique, chaque image étant identifiée par un fichier vidéo et un indice temporel de la trame correspondante.Les images clés peuvent par exemple être extraites de la vidéo selon un échantillonnage temporel régulier, ou être construites en se basant sur une analyse du contenu des images de la vidéo.

Bien entendu l'invention ne se limite pas à l'analyse de contenus vidéo, mais concerne l'analyse de contenus multimédia à dimension temporelle en général (c'est-à-dire constitués d'une succession temporelle d'entités élémentaires). Par exemple, les entités élémentaires d'un contenu audio sont des échantillons temporels ou des trames.

Plus précisément, lors de la lecture ou du téléchargement du contenu vidéo 11, on sélectionne certaines images 13 du contenu vidéo, dite images clés, permettant de décrire le contenu visuel de la vidéo, en utilisant la même technique que celle utilisée pour les contenus de référence.

Pour chaque image clé courante 13, on calcule (14) tout d'abord un ou plusieurs descripteurs, selon que l'on utilise une approche globale ou locale, comme décrit en relation avec l'art antérieur.

A chaque image clé 13 de la vidéo analysée, une requête à la base de référence 12 renvoie un ensemble d'images candidates (zéro, une ou plusieurs) potentiellement similaires à l'image clé 13 analysée. Plus précisément, on compare (15) le ou les descripteurs de l'image clé courante 13 à des descripteurs connus, décrivant des contenus de référence, référencés dans la base de référence 12. On détecte ainsi des images des contenus de référence de la base 12, qui sont proches des images clés 13 du contenu vidéo 11 à analyser. Ces images sont appelées images candidates.

Chaque image candidate est éventuellement accompagnée d'un score représentant son degré de similitude avec l'image clé 13. Le résultat de la recherche est généralement approximatif, ceci parce que la recherche par similarité dans la base de référence est approximative et/ou parce que les images sont potentiellement altérées.

En particulier, cette recherche moins précise, mais plus rapide, permet de réduire davantage et significativement le coût de la recherche.

Ainsi, parmi les images candidates, on peut avoir plusieurs fausses alarmes.

De même, si l'image requête correspond effectivement à une image de la base, elle n'est pas pour autant détectée systématiquement mais seulement avec une probabilité de détection donnée. Si la recherche dans la base ne renvoie aucune image candidate, il peut s'agir soit que l'image n'est pas dans la base, soit qu'elle l'est mais qu'elle n'a pas été trouvée par la procédure de recherche.

Ces images candidates sont alors traitées par un module de fusion des résultats des recherches basées images clés 16. Ce module de fusion 16 permet notamment, en tenant compte de la cohérence temporelle entre les images candidates associées à chaque image clé, de détecter si le flux vidéo 11 est une copie d'un contenu de référence de la base 12. Il permet également de supprimer les non détections et les images candidates correspondant à des fausses alarmes, en tenant compte de la cohérence temporelle des images successives, et de compenser la perte de précision due à cette recherche approximative.

Plus précisément, en sortie du module de fusion 16, il est possible de continuer l'analyse 161 du contenu vidéo 11 en étudiant l'image clé suivante du contenu vidéo, ou bien de décider d'interrompre l'analyse 162 suite à la reconnaissance d'une copie illicite.

A chaque nouvelle image clé du contenu vidéo 11, un ensemble de p scénarios possibles est mis à jour en fonction des transitions les plus probables et des nouvelles images candidates et des probabilités affectés à ces images. Un scénario correspond à un enchaînement de segments vidéo référencés ou non référencés (c'est-à-dire libre ou « non copyright ») dans la base de référence. Le scénario est un historique possible des segments vidéo présents dans la vidéo à contrôler depuis sa première image jusqu'à l'image courante.

Par exemple, si une copie illicite est détectée, le module 17 permet d'interrompre le téléchargement de la copie et/ou d'informer une autorité compétente.

En particulier, l'invention est mise en oeuvre au niveau du module de fusion 16, et permet notamment :

- de détecter des copies d'extraits de courtes durée ;
- d'effectuer des détections à la volée ;
- d'interrompre la recherche dès qu'une détection est avérée (i.e. consolidée par le module de fusion), ce qui permet de réduire davantage le temps de recherche.

La figure 2 illustre plus précisément les principales étapes du procédé d'analyse selon l'invention, mises en oeuvre pour l'analyse d'un contenu multimédia 20 (audio, vidéo, images, etc), visant à vérifier si le contenu multimédia 20 comprend ou non au moins une portion d'au moins un contenu de référence référencé dans une base de contenus de référence.

Un tel procédé selon l'invention peut être mis en oeuvre de diverses manières, notamment sous forme câblée ou sous forme logicielle.

Plus précisément, le contenu multimédia 20 est organisé en entités élémentaires successives (par exemple des images, ou des échantillons, ou des trames audio), parmi lesquelles on sélectionne (21) certaines entités élémentaires, permettant de décrire le contenu multimédia.

Pour chaque entité élémentaire sélectionnée I$_k$ du contenu multimédia 20, dite entité élémentaire courante, le procédé d'analyse met en oeuvre différentes étapes.

Au cours d'une étape 22, une probabilité de vraisemblance est affectée à chaque entité élémentaire d'un ensemble d'entités élémentaires candidates courantes.

Par exemple, les entités élémentaires candidates appartiennent à un contenu de référence référencés dans une base de référence, ou à un contenu dit « libre » ou NC (en anglais « non copyright »), non présent dans ladite base de référence.

La probabilité de vraisemblance tient compte d'une similarité entre l'entité élémentaire candidate et l'entité élémentaire courante I$_k$ du contenu multimédia 20.

Par exemple, on affecte une probabilité de vraisemblance $Pv_1^k$ à l'entité élémentaire candidate $I_1^k$ issue d'un contenu de référence $f_1$, une probabilité de vraisemblance $Pv_2^k$ à l'entité élémentaire candidate $I_2^k$ issue d'un contenu de référence $f_2$, et une probabilité de vraisemblance $Pv_{NC}^k$ à un contenu libre non référencé NC, où l'exposant k indique que l'entité élémentaire est candidate pour la $k^{ème}$ entité élémentaire I$_k$ du contenu analysé.

Plus l'entité élémentaire candidate est proche (similaire) de l'entité élémentaire courante, plus la probabilité de vraisemblance est élevée.

Au cours d'une étape 23, une probabilité de transition est affectée entre la ou lesdites entités élémentaires candidates courantes et au moins une entité élémentaire candidate précédente (sauf pour la première entité élémentaire sélectionnée du contenu multimédia).

Par exemple, on affecte :

- une première probabilité de transition (Pc) qu'une entité élémentaire candidate courante et une entité élémentaire candidate précédente appartiennent à un même contenu de référence, ou
- une deuxième probabilité de transition (P$_0$) qu'une entité élémentaire candidate courante et une entité élémentaire candidate précédente appartiennent à des contenus de référence différents, ou
- une troisième probabilité de transition (Pnc) qu'une entité élémentaire candidate courante appartienne à un contenu libre et une entité élémentaire candidate précédente appartienne à un contenu de référence, ou
- une quatrième probabilité de transition (Pcnc) qu'une entité élémentaire candidate courante et une entité élémentaire candidate précédente appartiennent à un contenu libre, ou
- une cinquième probabilité de transition qu'une entité élémentaire candidate courante appartienne à un contenu de référence et une entité élémentaire candidate précédente appartienne à un contenu libre.

Au cours d'une étape suivante 24, on affecte une probabilité d'identification à au moins un scénario composé d'une succession temporelle d'entités élémentaires candidates, tenant compte :

- des probabilités de vraisemblance affectées aux entités élémentaires candidates dudit scénario ; et
- des probabilités de transition affectées aux entités élémentaires candidates dudit scénario ;

Par exemple, on considère que, pour l'entité élémentaire sélectionnée précédente I$_{k-1}$ du contenu multimédia 20, on avait affecté une probabilité d'identification $w^{k-1}$ à un des scénarios envisageables ( $I_1^0, \ldots, I_1^{k-1}$ ).

Pour l'entité élémentaire courante I$_k$ du contenu multimédia 20, un scénario possible est par exemple défini par les entités élémentaires candidates $I_1^0, \ldots, I_1^{k-1}$, $I_1^k$, un autre est défini par les entités élémentaires candidates $I_1^0, \ldots, I_1^{k-1}$, $I_2^k$, encore un autre est défini par les entités élémentaires candidates $I_1^0$, ..., NC, NC, etc.

Au cours de l'étape 24, on affecte une probabilité d'identification à chacun de ces scénarios.

Par exemple, la probabilité d'identification du scénario $I_1^0, \ldots, I_1^{k-1}$, $I_1^k$, notée $w^k$, est égale au produit de la probabilité d'identification à l'instant précédent $w^{k-1}$ du scénario $I_1^0, \ldots, I_1^{k-1}$, de la probabilité de vraisemblance de l'entité élémentaires $I_1^k$ et de la probabilité de transition entre les entités élémentaires $I_1^{k-1}$ et $I_1^k$, notée

$$Pt(I_1^k / I_1^{k-1}):$$

$$w^k = w^{k-1} \times Pt(I_1^k / I_1^{k-1}) \times Pv_1^k$$

Pour la première entité élémentaire sélectionnée du contenu multimédia, on peut considérer que la probabilité d'identification d'un scénario est égale à la probabilité de vraisemblance de l'image candidate correspondante.

Finalement, en fonction des probabilités d'identification des différents scénarios possibles, le procédé peut prendre une décision 25 de reconnaissance d'un contenu de référence (ou d'une portion de ce contenu), par exemple le contenu de référence $f_1$ si la probabilité d'identification du scénario $I_1^{k-1}$, $I_1^k$ est supérieure à un seuil prédéterminé, ou prépondérante par rapport aux probabilités d'identification des autres scénarios. Il est ainsi possible de détecter à la volée, c'est-à-dire en cours de lecture ou d'analyse du contenu multimédia, si ce contenu comprend au moins une portion d'un contenu de référence.

Sinon, il est possible de poursuivre l'analyse du contenu multimédia 20 en rebouclant sur les étapes 22, 23, et 24 décrites précédemment pour une nouvelle entité élémentaire sélectionnée $I_{k+1}$ du contenu multimédia 20.

*5.2 Exemple de mise en oeuvre pour l'analyse de contenus vidéo*

On présente désormais en exemple de mise en oeuvre de l'invention dans un dispositif d'analyse (par exemple un serveur) pour la détection de copies vidéo.

On rappelle de nouveau que l'invention s'applique également à l'analyse d'autres types de contenus multimédia, comme les contenus audio par exemple.

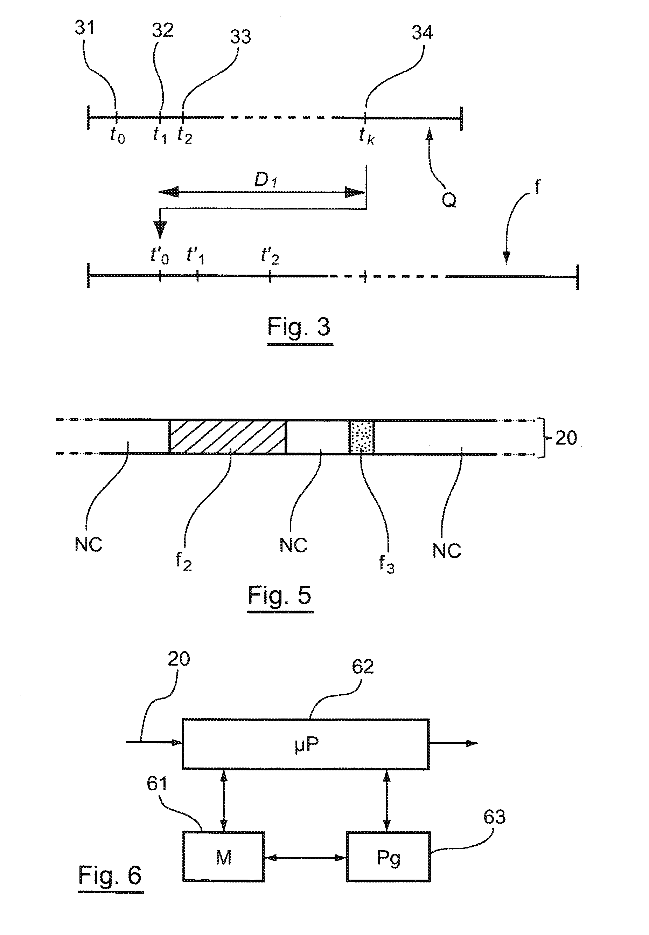

On note $Q$ le contenu multimédia que l'on cherche à analyser. Comme indiqué précédemment, le problème de la détection de copies consiste à rechercher la ou les vidéos stockées dans une base de référence dont la vidéo à analyser $Q$ pourrait être une copie. Selon cet exemple, on sélectionne des entités élémentaires la vidéo $Q$, comme illustré en figure 3, correspondant à des images clés. Les images clés peuvent par exemple être extraites de la vidéo $Q$ selon un échantillonnage temporel régulier, ou être construites en se basant sur une analyse du contenu des images de la vidéo $Q$.

Comme illustré sur la figure 3, on considère par exemple que les images clés 31, 32, 33, 34 de la vidéo $Q$ surviennent respectivement aux instants $t_0$, $t_1$, $t_2$, et $t_k$.

La détection de copies revient à mettre en correspondance chacune de ces images clés avec une image d'un contenu vidéo référencé dans une base de contenus de référence, ou avec une vidéo « fictive » si l'image clé de la vidéo à analyser n'est pas décrite dans la base de référence.

Autrement dit, la quantité recherchée à l'instant $t_k$, correspondant à une image clé de la vidéo à analyser $Q$, est une grandeur $x_k$ qui peut prendre les valeurs suivantes :

- soit un couple $(f, D_t)$, où $f$ est le numéro du contenu de référence reconnu de la base de référence, et $D_t$ le décalage temporel entre l'instant $(t_k)$ du contenu vidéo à analyser $Q$, correspondant à une image clé, et l'instant $(t'_0)$ du contenu vidéo de référence $f$, correspondant à une image reconnue. Par exemple, si on considère l'exemple illustré en figure 3, on a $D_t = t_k - t'_0$ ;

- soit une valeur prédéterminée, par exemple la valeur « NC » pour « non copyright » quand l'image clé du contenu vidéo à analyser $Q$ à l'instant $t_k$ n'est mise en correspondance avec aucune image clé présente dans la base de référence. En d'autres termes, la grandeur $x_k$ peut prendre la valeur NC quand la sous-séquence de la vidéo à analyser $Q$ autour de l'image clé à l'instant $t_k$ ne correspond à aucune vidéo référencée dans la base de référence.

On dénomme par la suite la grandeur $x_k$ « état instantané ». Plus précisément, cette grandeur correspond à un état caché, en utilisant la terminologie définie pour les chaînes de Markov, puisque l'on n'a pas directement accès à cette grandeur.

Étant donné le lien temporel (cohérence temporelle) existant entre deux états instantanés successifs $x_{k-1}$ et $x_k$, correspondant à deux images clés consécutives de la vidéo à analyser $Q$, on tient compte selon l'invention de l'historique des états instantanés depuis l'instant initial de début de l'analyse (par exemple l'instant $t_0$), jusqu'à l'instant courant (par exemple l'instant $t_k$). On note cet historique (encore appelé scénario) $x_{0:k}$, correspondant à la concaténation des états instantanés $x_i$ pour $i$ allant de 0 à $k$.

Cette grandeur $x_{0:k}$ n'est pas connue directement, mais une recherche des descripteurs dans la base de référence permet de fournir une observation de ces grandeurs. Il faut toutefois noter que cette observation est bruitée, principalement pour deux raisons :

- la vidéo copiée peut avoir été altérée intentionnellement pour la rendre difficilement reconnaissable, ou non intentionnellement pour des raisons éditoriales ou à cause des effets de transcodage ;
- la recherche par similarité dans la base de référence fournit des résultats qui peuvent être imprécis et/ou imparfaits. Ces imprécisions/imperfections sont principalement dues aux limitations des descripteurs des images clés et à l'imprécision introduite lors la recherche par similarité pour accélérer les recherches.

Autrement dit, la recherche dans la base de référence peut donner lieu à des non détections, ce qui signifie que l'image clé de la vidéo à analyser $Q$ se trouve dans la base de référence mais n'a pas été détectée lors de la recherche, et à des fausses alarmes, ce qui signifie que la recherche renvoie des images candidates alors que la vidéo à analyser n'est pas une vidéo copiée.

Plus précisément, une observation à un instant $t_k$ peut prendre la forme d'un ensemble $Z_k$ de $m$ valeurs $z_{ik}$, pour $i = l...m$, chaque $z_{ik}$ renvoyant à une image clé d'une vidéo référencée dans la base de référence. Comme pour les états $x_k$, une observation correspond à un couple $(f, D_t)$, où $f$ est le numéro du contenu de référence reconnu de la base de référence et $D_t$ le décalage temporel entre l'indice temporel de la vidéo à analyser et celui de l'image correspondante reconnue dans le contenu vidéo $f$.

En particulier, on peut associer à chaque $z_{ik}$ un score qui correspond au degré de confiance accordé au résultat de la recherche par similarité dans la base de référence.

L'approche utilisée selon l'invention se base sur le principe de l'inférence bayesienne dans des chaînes de Markov cachées. En particulier il s'agit d'un problème de filtrage bayesien.

Du fait de l'incertitude existant sur la valeur du scénario recherché, on considère le problème en termes probabilistes. On cherche donc à établir la distribution de probabilités de l'historique des états $x_{0:k}$, connaissant les observations $Z_{0:k}$. On note $p(x_{0:k} | Z_{0:k})$ cette distribution.

Comme dans l'approche du filtrage particulaire, cette distribution est représentée par des échantillons (correspondant aux scénarios possibles) ces échantillons étant pondérés par leur probabilité d'identification évaluée par l'invention, Cet ensemble d'échantillons est donc l'ensemble $\left\{ \left( x_{o:k}^{(j)}, w_j \right), j = 1...N \right\}$ où:

- chaque poids $w_j$ correspond à la probabilité que le scénario réel soit le scénario $x_{o:k}^{(j)}$ connaissant les observations, i.e. la probabilité d'identification associée à ce scénario ;
- $N$ est le nombre de scénarios considérés.

L'approche proposée selon l'invention est itérative, en ce sens qu'elle peut être répétée pour plusieurs entités élémentaires (images clés) successives, par exemple aux instants $t_0$, $t_1$, $t_2$, $t_k$, etc, et qu'à chaque étape, l'ensemble des scénarios possibles est mis à jour à partir de l'ensemble des scénarios évalués à l'étape précédente.

On calcule ainsi la distribution $p(x_{0:k} | Z_{0:k})$ à partir des échantillons représentant $p(x_{0:k-1}|Z_{0:k-1})$. On utilise l'expression issue de la loi de Bayes en probabilités qui donne:

$$p(x_{0:k} | Z_{0:k}) = \frac{p(Z_k | x_k) p(x_{0:k} | Z_{0:k-1})}{p(Z_k | Z_{k-1})} \quad . \tag{1}$$

Plus précisément, le procédé selon l'invention peut se formaliser suivant deux phases (suivant la terminologie utilisée pour le filtrage bayésien) :

- une phase dite de prédiction où les échantillons à l'instant $t_{k-1}$ sont propagés jusqu'à l'instant $t_k$, sans tenir compte des observations à l'instant $k$ (c'est-à-dire sans tenir compte des nouvelles images candidates issues de la recherche à l'instant $t_k$). C'est l'évaluation de $p(x_{0:k}|Z_{0:k-1})$;
- une phase de correction où le poids des échantillons est modifié par la grandeur $p(Z_k|x_k)$, appelée vraisemblance des données. Cette probabilité de vraisemblance correspond à la probabilité des observations connaissant l'état.

En particulier, on peut noter qu'il n'est pas nécessaire d'évaluer le dénominateur de l'expression (1), car il affecte identiquement tous les échantillons considérés et joue en fait le rôle de constante de normalisation (pour que la somme des poids des échantillons vaille 1).

*A) Prédiction des échantillons*

On décrit ci-après plus en détail la phase de prédiction des scénarios possibles (encore appelés échantillons).

On suppose qu'on dispose d'un jeu d'échantillons $\left\{\left(x_{o:k-1}^{(j)}, w_j\right), j=1\ldots N\right\}$ à l'instant $t_{k-1}$. Lors de la phase de prédiction, chaque échantillon est propagé suivant une dynamique qui traduit la probabilité de passer de l'état instantané $x_{k-1}$ à l'état instantané $x_k$. Formellement, chaque échantillon $x_{o:k-1}^{(j)}$ engendre un ou plusieurs échantillons qui représentent $p(x_k | x_{o:k-1}^{(j)})..$

Différentes expressions peuvent être envisagées pour cette dynamique, dépendant de l'application visée. Par exemple :

- si l'état instantané $x_{k-1}$ pointe vers un contenu de référence de la base, autrement dit si $x_{k-1} = (f, D_t)$ à l'instant $t_{k-1}$, alors il transitera vers :

  ■ l'état instantané $x_k = (f, D'_t)$ à l'instant $t_k$ avec une probabilité $P_c = W_c/S_w$, en considérant que les grandeurs $D_t$ et $D'_t$ sont cohérentes temporellement : dans ce cas, on poursuit avec le même contenu de référence $f$ de la base ;
  ■ l'état instantané $x_k=(f', D'_t)$ à l'instant $t_k$ avec une probabilité $P_o = W_o/S_w$, en considérant $f'$ différent de $f$ et/ou $D'_t$ et $D_t$ non cohérents : dans ce cas, on a une transition du contenu de référence $f$ vers un autre contenu de référence $f'$ de la base, ou vers un segment de $f$ disjoint du précédent ;
  ■ l'état instantané $x_k = NC$ à l'instant $t_k$ avec une probabilité $P_{nc} = W_{nc}/S_w$: dans ce cas, on transite du contenu de référence $f$ vers une vidéo non référencée dans la base, notée NC.

- si l'état instantané $x_{k-1}$ pointe vers un contenu non référencé dans la base, autrement dit si $x_{k-1} = NC$ à l'instant $t_{k-1}$, alors il transitera vers :

  ■ l'état instantané $x_k=NC$ avec une probabilité $P_{cnc} = W_{cnc}/S_w'$: dans ce cas, on poursuit avec le même contenu non référencé NC, ou avec un autre contenu non référencé ;
  ■ n'importe quel contenu de référence de la base de référence avec la probabilité $W_0/S'_w$.
  avec :

- $W_0$, $W_{nc}$, $W_c$ et $W_{cnc}$ des paramètres fixes ;

- $S_w$ et $S'_w$ sont des constantes de normalisation, telles que $S_w=W_c+(n-1)W_0+W_{nc}$ et $S_w' = W_{cnc} + nW_o$ , où $n$ correspond au nombre d'images clés indexées dans la base de référence ;

En particulier, plusieurs techniques peuvent être utilisées pour évaluer la notion de cohérence temporelle entre les grandeurs $D_t$ et $D'_t$. Par exemple, une méthode simple consiste à vérifier si l'on peut écrire $D_t = D'_t \pm \varepsilon$, avec $\varepsilon$ un seuil de tolérance fixé et petit. D'autres approches plus élaborées tenant compte de l'incertitude de positionnement des images clés peuvent également être mises en oeuvre.

Selon un exemple de réalisation particulier de l'invention, on choisit les paramètres $W_0$, $W_{nc}$, $W_c$ et $W_{cnc}$ tels que : $W_0 < W_{nc} < W_{cnc} < W_c < n$.

Les grandeurs $P_c$, $P_o$, $P_{nc}$, $P_{cnc}$ sont des probabilités de transition pour les différents cas de figure ci-dessus. En particulier, la grandeur $P_c$ est la probabilité de continuité vers une image clé dans la continuité de l'image précédente, c'est-à-dire appartenant au même contenu de référence (si celle-ci n'est pas non référencée). L'utilisateur peut notamment régler cette grandeur en fonction du type de vidéos qu'il souhaite identifier : si l'on sait que les vidéos analysées sont des copies intégrales, cette grandeur pourra être élevée, tandis que si l'on sait qu'elles peuvent être constituées d'une succession d'extraits de vidéos différentes appartenant à la base, ce paramètre devra être plus faible.

*B) Correction des échantillons*

La correction (i.e. modification du poids des échantillons) se fait en confrontant les échantillons prédits (issus de la phase de prédiction) aux observations obtenues à partir de la recherche par similarité dans la base de références à l'instant $t_k$.

Si les différentes images candidates, constituant l'ensemble des observations à l'instant $t_k$, sont accompagnées de scores (issu d'un processus de vote par exemple), on peut exprimer une probabilité de fausse alarme individuelle $Pfa$ à chaque image (et donc à chaque élément $z_{ik}$) dépendant de ce score. Ces scores sont représentatifs d'une confiance associée à l'image candidate. À titre d'exemple, on peut utiliser la formule suivante :

$$Pfa = \exp(-A(s - s_0))$$

où :

- $s$ est le score associé à une image candidate ;
- $s_0$ est le seuil à partir duquel on a considéré les images comme étant de bons candidats (par exemple, parmi *les n* images clés de la base de référence, on choisit *m* images dont la similitude avec l'image clé de la vidéo à analyser est supérieure au seuil $s_0$) ; et
- $A$ une constante positive.

Si par contre les différentes images candidates ne sont pas accompagnées de score, on peut donner la même probabilité de fausse alarme à toutes les images candidates.

On cherche donc à calculer une probabilité de vraisemblance $p(Z_k|x_k^{(j)})$, l'exposant *j* étant le numéro de l'échantillon considéré.

On peut choisir les grandeurs suivantes :

- si l'état instantané $x_k^{(j)}$ correspond à l'une des images candidates de l'ensemble $Z_k$ (par exemple à la $l^{ième}$ observation $z_{lk}$), alors la probabilité de vraisemblance vaut :

$$p(Z_k|x_k^{(j)}) = \left(1 - pfa(z_{lk})\right)\prod_{\substack{i=1\\i\neq l}}^{m} pfa(z_{ik}) \qquad (2)$$

En effet, il faut que l'observation *l* ne soit pas une fausse alarme et que toutes les autres observations en soient une. Si $Z_k$ contient seulement cette valeur, le produit est remplacé par 1.

- si l'état instantané $x_k^{(j)}$ n'est pas dans l'ensemble $Z_k$, alors la probabilité de vraisemblance vaut :

$$p(Z_k|x_k^{(j)}) = \left(1. - Pd\right)\prod_{i=1}^{m} pfa(z_{ik}) \qquad (3)$$

Il faut en effet que cet état n'ait pas été détecté (probabilité *1-Pd,* si *Pd* est la probabilité de détection inhérente au système de recherche dans la base) et que tout ce qui a été détecté soit des fausses alarmes. Si l'ensemble $Z_k$ est vide, le produit est remplacé par 1.

- si $x_k^{(j)}$ ne correspond pas à une images clé de la base de référence (i.e. $x_k^{(j)} = NC$), il faut que toutes les observations de l'ensemble $Z_k$ soient des fausses alarmes. La probabilité de vraisemblance vaut alors :

$$p(Z_k|x_k^{(j)}) = \prod_{i=1}^{m} pfa(z_{ik}) \qquad (4)$$

*C) Exemple de représentation*

On va donc stocker un ensemble de scénarios pondérés qui vont représenter les hypothèses possibles d'historiques. À la première image clé, on initialise cet ensemble avec les *m* observations faites ainsi qu'une observation supplémentaire NC correspondant à l'hypothèse de l'observation d'une vidéo non référencée dans la base.

Ces échantillons sont pondérés par la probabilité de vraisemblance de chaque observation calculée suivant les équations (2) et (4) précédentes.

Dans une approche de type Monte Carlo, on peut ajouter à cette initialisation des scénarios issus d'un tirage aléatoire sur les états instantanés afin de compléter l'ensemble des scénarios, et leur affecter un poids issu de l'équation (3). Ceci revient à rajouter à l'ensemble $Z_k$ des observations tirées aléatoirement à partir des vidéos de la base de référence.

Une fois initialisé, l'ensemble des échantillons est propagé jusqu'à l'instant suivant. Chaque échantillon peut donner lieu à plusieurs échantillons à l'instant suivant. Ces nouveaux échantillons propagés sont affectés, dans un premier temps, d'un poids en fonction de la loi de prédiction définie.

Il est ensuite possible d'établir toutes les transitions vers toutes les images possibles de la base et vers l'image *NC,* et mettre à jour les poids en fonction des observations suivantes. Cela conduit à un nombre élevé de scénarios.

Une alternative de type Monte Carlo consiste à choisir par tirage aléatoire certains de ces scénarios en fonction de leur probabilité d'apparition.

Une autre alternative consiste à sélectionner un jeu de scénarios ayant de bonnes chances de conduire à une probabilité d'identification importante. Ainsi, à chaque prédiction, la transition vers un autre contenu n'est considérée que si ce contenu est dans l'ensemble des observations à l'instant suivant.

Par exemple, on suppose que l'on reçoit les observations suivantes aux instants successifs $t_0$, $t_1$ et $t_2$ :

| Instant $t_0$ | Instant $t_1$ | Instant $t_2$ |
|---|---|---|
| f1 | f1 | f2 |
| f2 | | f3 |

On considère également dans cet exemple que les vidéos apparaissant plusieurs fois sont supposées apparaître de manière cohérente, c'est-à-dire avec des grandeurs $D_t$ proches. Pour des raisons de simplification d'écriture, on ne note pas ces $D_t$.

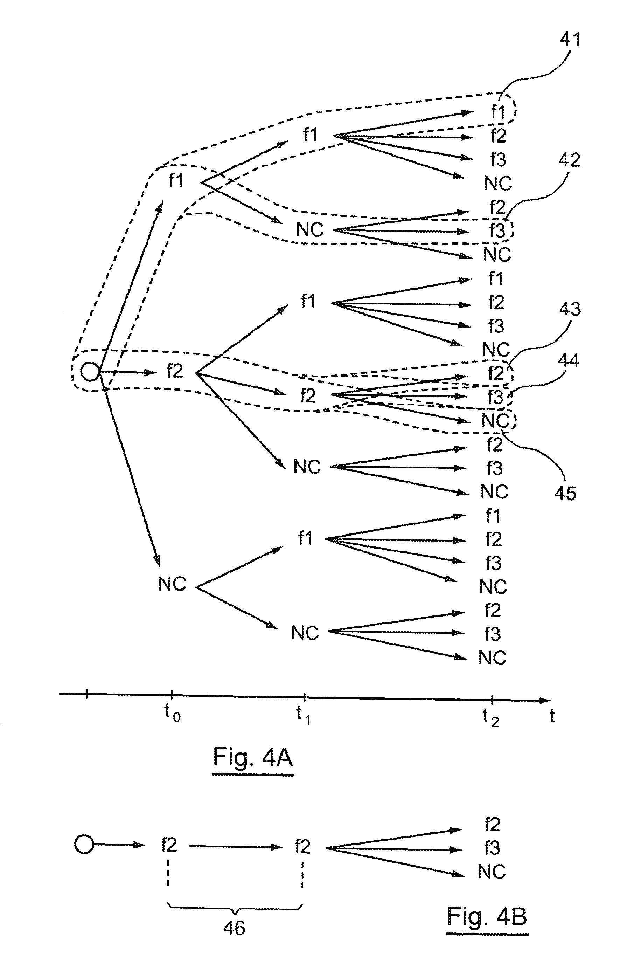

La figure 4A illustre sous forme d'arbre les différents cas pris en compte en respectant la règle ci-dessus.

Plus précisément, on rappelle qu'un scénario est formée en suivant une branche de l'arbre depuis la racine jusqu'à une feuille. Par exemple, les chemins 41 à 45 définissent des scénarios distincts.

On peut calculer la probabilité d'identification d'un scénario en utilisant les règles de calcul énoncées précédemment.

Par exemple, la probabilité du scénario 41 correspond à :

- la probabilité de vraisemblance de la vidéo de référence f1 à l'instant $t_0$, multiplié par
- la probabilité de transition vers un même contenu temporellement cohérent (continuité) entre les instants to et $t_1$, multiplié par
- la probabilité de vraisemblance de la vidéo de référence f1 à l'instant $t_1$, multiplié par
- la probabilité de transition de continuité entre les instants $t_1$ et $t_2$, multiplié par
- la probabilité de vraisemblance de la vidéo de référence f1 à l'instant $t_2$.

En d'autres termes, le scénario 41 consiste à étudier la possibilité que la vidéo analysée corresponde à la vidéo f1 de la base de référence aux trois instants successifs $t_0$, $t_1$ et $t_2$.

On constate sur cette figure 4A que même pour un cas très réduit comme cet exemple, le nombre de scénarios peut devenir élevé après un petit nombre d'images clés analysées.

Selon une variante, on peut réduire le nombre de scénarios envisagés en constatant que deux scénarios se terminant (par exemple à l'instant $t_2$) par la même image clé auront un destin commun, c'est-à-dire qu'ils se trouveront toujours affectés par les mêmes coefficients s'ils sont prolongés à des instants à venir par les mêmes images. Ainsi, si l'un d'eux est plus probable que l'autre, il le restera toujours. On peut donc éliminer le scénario le moins probable parmi ces deux-là (par exemple, dans la figure 4A, les scénarios 42 et 44 ont un destin commun).

Selon une autre approche, il est possible d'utiliser un algorithme de Viterbi. Cette approche nécessite d'analyser l'ensemble des images clés du contenu à analyser, et par une procédure rétroactive (appelée en anglais «back-track »), elle permet de sortir à la fin de l'analyse du contenu suspect, le scénario le plus probable (ce qui correspondant à un chemin dans l'arbre). On peut noter que selon cette approche, le résultat est retourné à la fin de l'analyse ou à tout instant à la demande, mais non à la volée.

Des approximations efficaces peuvent également être envisagées en élaguant l'arbre des scénarios au fur et à mesure de leur calcul, comme illustré en figure 4B.

On peut aussi ajouter un critère supplémentaire permettant de restreindre le nombre de scénarios conservés à ceux dont la probabilité est supérieure à une fraction de la probabilité du scénario le plus probable.

Plus précisément, on peut mettre à jour à chaque instant les différents scénarios et ne conserver que les *N* meilleurs, c'est-à-dire les *N* scénarios les plus probables. À titre d'exemple, on peut choisir N = 20 dans un cas réel.

On peut également, conjointement à cette restriction ou à sa place, ne garder que les scénarios ayant, à l'instant courant, une probabilité d'identification supérieure à un seuil fixé, ou encore ajouter un critère supplémentaire permettant de restreindre le nombre de scénarios conservés à ceux dont la probabilité est supérieure à une fraction de la probabilité de l'état le plus probable.

On conserve ainsi les scénarios les plus pertinents, qui auront une chance de conduire à la meilleure solution, en se basant sur leur probabilité à l'instant courant. On peut ainsi fournir selon l'invention un résultat en ligne quasi-optimal.

Par exemple, si l'on ne conserve, à partir des critères de sélection évoqués plus haut, que les scénarios 43, 44, et 45, on constate que ceux-ci présentent une racine commune 46 : ces trois scénarios correspondent à la détection de la vidéo de référence f2 aux instants to et $t_1$. Le résultat est alors certain pour les deux images clé correspondant aux instants to et $t_1$. Autrement dit, ce résultat ne changera plus quelles que soient les détections futures. On a ainsi fourni un résultat déterministe (certain) avec un minimum de délai (autrement dit, « à la volée»). Ce délai est auto-adaptatif et dépend de l'enchaînement des observations.

De manière plus générale, à l'instant courant *t*, les *p* scénarios possibles auront une racine commune (correspondant à ce qui a été détecté entre *0* et *t-m*), indiquant que les nouvelles images candidates n'ont plus d'influence sur ce qui se passait *m* images auparavant. Cette racine commune est le résultat partiel de détection de copies vidéo obtenu à la volée. La valeur de *m* (délai de décision finale) est généralement faible. Elle n'est pas fixée mais obtenue automatiquement par l'algorithme.

Ainsi, si l'algorithme identifie qu'un scénario est prépondérant par rapport aux autres, *m* sera très faible et la détection quasi-instantanée (ce scénario s'imposera comme racine commune des scénarios en cours), tandis que si plusieurs scénarios sont en concurrence, *m* sera plus élevé, et un délai supplémentaire sera nécessaire pour conforter l'une ou l'autre des hypothèses de scénarios.

La figure 5 illustre un exemple de résultat d'analyse du contenu multimédia à analyser 20. Après mise en oeuvre du procédé d'analyse selon l'invention, on peut détecter que le contenu multimédia 20 comprend tout d'abord un segment non référencé (NC), puis une portion de la vidéo f2 référencée dans la base de référence, de nouveau un segment non référencé, puis une nouvelle portion de vidéo f3 référencée dans la base de référence, etc.

*D) Exemple d'implémentation*

On décrit ci-après un exemple d'implémentation de l'invention, pour un pas de temps et l'image clé correspondante du contenu à analyser.

On considère par exemple que le module de fusion selon l'invention prend en entrée :

- des observations $z_{ik}$ à l'instant $t_k$ (*i*=1..*m*) et leurs scores (en réalité *m* dépend de *k*, mais on fait abstraction de l'indice *k* pour simplifier l'écriture). L'ensemble des observations peut aussi être vide ;
- un ensemble $E_{k-1}$ de scénarios possibles (encore appelés hypothèses ou échantillons) et leurs probabilités d'identification, obtenus à l'itération précédente, ou l'ensemble vide si l'image courante est la première image clé.

Alors le module de fusion délivre en sortie :

- un ensemble $E_k$ de scénarios possibles et leurs probabilités après exploitation de l'image clé à l'instant $t_k$.

Plus précisément, le module de fusion met en oeuvre les étapes suivantes :

1. Calcul des probabilités de fausse alarme *pfa($z_{ik}$)* pour les observations en entrée ;
2. Si l'image courante est la première image clé du contenu à analyser (initialisation) :

- on initialise l'ensemble $E_1$ avec les différents $z_{ik}$, et un poids *(1-pfa($z_{ik}$))/pfa($z_{ik}$)* (équation (2) divisée par le produit de toutes les probabilités de fausse alarme. Ce coefficient est appliqué systématiquement ce qui n'affecte pas les proportions et donc le résultat final) ;
- on ajoute l'image *NC* avec un poids de 1 (équation (4) divisée par le produit des probabilités de fausse alarme) ;

- on sort de la procédure avec $E_1$ comme sortie.

3. Sinon (itération standard à l'instant $t_k$) :

- boucle sur les observations $z_{ik}$, i=1..m :

  ○ boucle sur les éléments j de l'ensemble $E_{k-1}$ *(j=1..N)* contenant les scénarios retenus entre l'instant initial et l'instant $t_k$. On augmente virtuellement le scénario *j* courant de l'observation *i* courante et on l'affecte d'un poids (correspondant à une constante de normalisation près, à la probabilité d'identification) qui est le produit du poids de propagation (correspondant à une constante de normalisation près, à la probabilité de transition) et du poids de vraisemblance (correspondant à une constante de normalisation près, à la probabilité de vraisemblance). Donc :

  - si $z_{ik}$ est cohérent avec le scénario *j* (provenant de la même vidéo avec des décalages *D* compatibles), l'élément (scénario) *j* de $E_{k-1}$ est prolongé est affecté d'un coefficient multiplicateur

  $$\frac{W_c}{S_w} \frac{1 - pfa(z_{ik})}{pfa(z_{ik})} \; ;$$

  On peut noter que dans cette mise en oeuvre, la probabilité $pfa(z_{ik})$ ne peut être nulle car cela conduirait à une division par zéro. Cette situation indique qu'on est certain de l'observation $z_{ik}$, auquel cas il suffit de ne garder qu'un scénario possible (celui qui a la meilleure probabilité d'identification quand on le prolonge avec $z_{ik}$), et d'affecter le poids 1 au scénario ainsi prolongé ;

  - sinon, le coefficient multiplicateur est $\dfrac{W_0}{S_w} \dfrac{1 - \overline{pfa}(z_{ik})}{pfa(z_{ik})}$

  (transition vers une autre image clé).

  ○ parmi tous les scénarios envisagés dans la boucle sur les éléments de $E_{k-1}$ ci-dessus, on ne conserve que celui qui conduit au poids le plus élevé (correspondant à une constante de normalisation près, à la probabilité d'identification de ce scénario), que l'on insère dans $E_k$ avec un poids correctement mis à jour.

- prise en compte de la possibilité d'avoir une image non référencée dans la base de référence (images NC) :

  ○ boucle sur les éléments de l'ensemble $E_{k-1}$ ;
  on augmente virtuellement ces scénarios avec « NC » et on affecte leur poids d'un coefficient multiplicateur qui vaut :

  - $\dfrac{W_{nc}}{S_w}$ si l'image précédente dans le scénario n'était pas « NC » ;

  - $\dfrac{W_{cnc}}{S'_w}$ sinon.

  ○ comme précédemment, on ne garde que le scénario dont le poids est le plus fort, et on l'intègre à l'ensemble $E_k$.

- prise en compte des non-détections :

  ○ boucle sur les scénarios de l'ensemble $E_{k-1}$ n'ayant pas été encore prolongés et intégrés à $E_k$ ;
  on les augmente du même état instantané que celui obtenu à l'instant précédent, on multiplie leur poids

  par $\dfrac{W_c}{S_w}(1 - Pd)$.

○ on intègre tous ces scénarios à l'ensemble $E_k$.

- normalisation : le poids de chaque élément de l'ensemble $E_k$ est divisé par la somme de tous les poids (pour avoir la somme à 1) ;
- sélection : on peut ici choisir de ne garder dans l'ensemble $E_k$ que les *N* meilleurs scénarios, et/ou ceux qui ont une probabilité supérieure à un certain seuil, etc ;
- critère d'arrêt : selon l'application, on peut chercher à déterminer la racine commune de tous les scénarios conservés, et évaluer si on peut statuer de façon sûre sur la présence d'un contenu de référence dans la vidéo analysée. Le cas échéant, on peut choisir d'arrêter la procédure d'analyse.

*5.3 Avantages liés à l'invention*

La technique selon l'invention présente de nombreux avantages, et notamment :

- elle repose sur une recherche d'entités élémentaires candidates d'une part et sur la fusion des résultats pour l'ensemble des entités élémentaires clés du contenu multimédia à analyser par leur cohérence temporelle ;
- la détection des copies peut s'effectuer à la volée en exploitant notamment la cohérence temporelle. Celle-ci est modélisée de façon probabiliste et ne fait aucune hypothèse forte sur la durée du segment à analyser (vidéo par exemple), ou sur le nombre d'entités élémentaires clés à analyser avant de retourner une réponse (décision de reconnaissance). Ce délai de réponse s'adapte dynamiquement en fonction du contenu multimédia analysé et du contenu de référence ;
- l'outil est en mesure d'identifier des segments de contenus multimédia indexés, éventuellement concaténés dans le contenu à analyser ;
- dans le cas où le contenu multimédia à analyser est une concaténation de segments de contenus multimédia, les bornes (début et fin) de ces segments peuvent être retrouvées par le module de fusion ;
- on peut grâce à la technique proposée, disposer d'un outil de recherche d'entités élémentaires candidates moins précis, et en accroître ainsi la rapidité, la perte de précision à chaque entité élémentaire étant compensée par la multiplicité des entités élémentaires temporellement cohérentes ;
- on peut également choisir d'interrompre la lecture d'un contenu multimédia à analyser dès lors qu'un fragment de contenu référencé dans une base de référence a été détecté.

*5.4 Structure du dispositif d'analyse*

On présente finalement, en relation avec la figure 6, la structure simplifiée d'un dispositif d'analyse mettant en oeuvre une technique d'analyse d'un contenu multimédia selon le mode de réalisation particulier décrit ci-dessus.

Un tel dispositif d'analyse comprend notamment une mémoire 61 constituée d'une mémoire tampon, une unité de traitement 62, équipée par exemple d'un microprocesseur µP, et pilotée par le programme d'ordinateur 63, mettant en oeuvre le procédé d'analyse d'un contenu multimédia selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée au contenu multimédia 20 à analyser. Le microprocesseur de l'unité de traitement 62 met en oeuvre les étapes du procédé d'analyse décrit précédemment, selon les instructions du programme d'ordinateur 63, pour vérifier si le contenu multimédia 20 comprend ou non au moins une portion d'au moins un contenu de référence référencée dans une base de contenus de référence. Pour cela, le dispositif d'analyse comprend, outre la mémoire tampon 61, des moyens d'affectation d'une probabilité de vraisemblance à chaque entité élémentaire d'un ensemble d'entités élémentaires candidates courantes, des moyens d'affectation d'une probabilité de transition entre la ou les entités élémentaires candidates courantes et au moins une entité élémentaire candidate précédente, des moyens d'affectation d'une probabilité d'identification d'au moins un scénario composé d'une succession temporelle d'entités élémentaires candidates, et des moyens de décision de reconnaissance d'un des contenus de référence et/ou de poursuite de l'analyse à l'aide d'une entité élémentaire suivante du contenu multimédia. Ces moyens sont pilotés par le microprocesseur de l'unité de traitement 62.

L'unité de traitement 62 peut délivrer un résultat d'analyse tel qu'illustré en figure 5, et éventuellement interrompre le téléchargement du contenu multimédia si des contenus de référence ou des portions de contenus de référence sont détectées dans ce contenu.

**Revendications**

1. Procédé d'analyse d'un contenu multimédia, constitué d'une succession temporelle d'entités élémentaires, visant à vérifier si ledit contenu multimédia comprend ou non au moins une portion d'au moins un contenu de référence référencé dans une base de contenus de référence, mettant en oeuvre, pour au moins une entité élémentaire du contenu multimédia à analyser sélectionnée selon une règle de sélection prédéterminée, dite entité élémentaire courante, une étape d'affectation d'une probabilité de vraisemblance (22) à chaque entité élémentaire d'un ensemble d'entités élémentaires candidates courantes, ladite probabilité de vraisemblance tenant compte d'une similarité entre ladite entité élémentaire candidate et ladite entité élémentaire courante dudit contenu multimédia ;
   **caractérisé en ce qu'**il met également en oeuvre les étapes suivantes :

   - affectation d'une probabilité de transition (23) entre la ou lesdites entités élémentaires candidates courantes et au moins une entité élémentaire candidate précédente ;
   - affectation d'une probabilité d'identification (24) à au moins un scénario composé d'une succession temporelle d'entités élémentaires candidates, tenant compte :

      • des probabilités de vraisemblance affectées aux entités élémentaires candidates dudit scénario ; et
      • des probabilités de transition affectées aux entités élémentaires candidates dudit scénario ;

   - décision de reconnaissance (25) d'un desdits contenus de référence et/ou de poursuite de l'analyse à l'aide d'une entité élémentaire suivante dudit contenu multimédia, en fonction de ladite probabilité d'identification.

2. Procédé d'analyse selon la revendication 1, **caractérisé en ce que** lesdites entités élémentaires candidates appartiennent au groupe comprenant :

   - une entité élémentaire appartenant à un desdits contenus de référence et
   - une entité élémentaire représentative d'un contenu dit « libre », non référencé dans ladite base de référence.

3. Procédé d'analyse selon la revendication 2, **caractérisé en ce que** ladite étape de décision de reconnaissance (25) reconnaît au moins une portion d'un desdits contenus de référence ou ledit contenu libre.

4. Procédé d'analyse selon l'une quelconque des revendications 1 à 3, **caractérisé en ce que** ladite étape d'affectation d'une probabilité de vraisemblance (22) tient compte d'une comparaison entre un descripteur de ladite entité élémentaire courante et un descripteur de ladite entité élémentaire candidate.

5. Procédé d'analyse selon l'une quelconque des revendications 1 à 4, **caractérisé en ce que** ladite étape d'affectation d'une probabilité de transition (23) affecte à chaque entité élémentaire candidate courante une probabilité appartenant au groupe comprenant :

   - une première probabilité de transition (Pc) que ladite entité élémentaire candidate courante et une entité élémentaire candidate précédente appartiennent à un même contenu de référence;
   - une deuxième probabilité de transition ($P_0$) que ladite entité élémentaire candidate courante et une entité élémentaire candidate précédente appartiennent à des contenus de référence différents ;
   - une troisième probabilité de transition (Pnc) que ladite entité élémentaire candidate courante appartienne à un contenu libre, non référencé dans ladite base de référence, et une entité élémentaire candidate précédente appartienne à un contenu de référence ;
   - une quatrième probabilité de transition (Pcnc) que ladite entité élémentaire candidate courante et une entité élémentaire candidate précédente appartiennent à un contenu libre, non référencé dans ladite base de référence ;
   - une cinquième probabilité de transition que ladite entité élémentaire candidate courante appartienne à un contenu de référence et une entité élémentaire candidate précédente appartienne à un contenu libre, non référencé dans ladite base de référence.

6. Procédé de d'analyse selon la revendication 5, **caractérisé en ce que** ladite première probabilité de transition est supérieure ou égale à ladite troisième probabilité de transition, elle-même supérieure ou égale à ladite deuxième probabilité de transition.

7.  Procédé d'analyse selon l'une quelconque des revendications 1 à 6, **caractérisé en ce que** lesdits scénarios sont représentés sous la forme d'un arbre associant à chacune des entités élémentaires candidates courantes l'ensemble des entités élémentaires candidates précédentes,
    ladite étape d'affectation d'une probabilité de vraisemblance (22) affectant une probabilité de vraisemblance à chacun des noeuds de l'arbre, et
    ladite étape d'affectation d'une probabilité de transition (23) affectant une probabilité de transition à chacune des branches de l'arbre.

8.  Procédé d'analyse selon l'une quelconque des revendications 1 à 7, **caractérisé en ce qu'**il comprend une étape de sélection d'un sous-ensemble de scénarios les plus probables.

9.  Procédé d'analyse selon la revendication 8, **caractérisé en ce que** ladite étape de sélection sélectionne les scénarios présentant une probabilité d'identification supérieure à un seuil prédéterminé.

10. Procédé d'analyse selon la revendication 8, **caractérisé en ce que** ladite étape de sélection sélectionne les N scénarios présentant les probabilités d'identification les plus élevés, avec N un entier positif.

11. Procédé d'analyse selon la revendication 7, et l'une quelconque des revendications 8 à 10, **caractérisé en ce que** ladite étape de décision de reconnaissance (25) reconnaît une portion d'un desdits contenus de référence ou d'un contenu libre, non référencé dans ladite base de référence, lorsque la partie correspondante dudit arbre comprend une branche unique.

12. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé d'analyse selon l'une au moins des revendications 1 à 11.

13. Dispositif d'analyse d'un contenu multimédia, constitué d'une succession temporelle d'entités élémentaires, permettant de vérifier si ledit contenu multimédia comprend ou non au moins une portion d'au moins un contenu de référence référencé dans une base de contenus de référence,
    comprenant, pour au moins une entité élémentaire du contenu multimédia à analyser sélectionnée selon une règle de sélection prédéterminée, dite entité élémentaire courante, des moyens d'affectation d'une probabilité de vraisemblance (22) à chaque entité élémentaire d'un ensemble d'entités élémentaires candidates courantes, ladite probabilité de vraisemblance tenant compte d'une similarité entre ladite entité élémentaire candidate et ladite entité élémentaire courante dudit contenu multimédia ;
    **caractérisé en ce qu'**il comprend également :

    - des moyens d'affectation d'une probabilité de transition (23) entre la ou lesdites entités élémentaires candidates courantes et au moins une entité élémentaire candidate précédente ;
    - des moyens d'affectation d'une probabilité d'identification (24) à au moins un scénario composé d'une succession temporelle d'entités élémentaires candidates, tenant compte :

        • des probabilités de vraisemblance affectées aux entités élémentaires candidates dudit scénario ; et
        • des probabilités de transition affectées aux entités élémentaires candidates dudit scénario ;

    - des moyens de décision de reconnaissance (25) d'un desdits contenus de référence et/ou de poursuite de l'analyse à l'aide d'une entité élémentaire suivante dudit contenu multimédia, en fonction de ladite probabilité d'identification.

**Claims**

1.  Method for analysing a piece of multimedia content, consisting of a temporal succession of individual entities, with the aim of verifying whether said multimedia content includes or does not include at least one portion of at least one reference content referenced in a reference content base,
    implementing, for at least one individual entity of the multimedia content to be analysed selected according to a predetermined selection rule, called current individual entity, a step for assigning a likelihood probability (22) to each individual entity of a set of current candidate individual entities, said likelihood probability taking into account a similarity between said candidate individual entity and said current individual entity of said multimedia content;

**characterized in that** it also implements the following steps:

- assignment of a transition probability (23) between said current candidate individual entity or entities and at least one preceding candidate individual entity;
- assignment of an identification probability (24) to at least one scenario consisting of a temporal succession of candidate individual entities, taking into account:

• the likelihood probabilities assigned to the candidate individual entities of said scenario; and
• the transition probabilities assigned to the candidate individual entities of said scenario;

- decision to recognize (25) one of said reference contents and/or to continue the analysis using a subsequent individual entity of said multimedia content, according to said identification probability.

2. Analysis method according to Claim 1, **characterized in that** said candidate individual entities belong to the group comprising:

- an individual entity belonging to one of said reference contents and
- an individual entity representative of a so-called "free" content, not referenced in said reference base.

3. Analysis method according to Claim 2, **characterized in that** said step for deciding to recognize (25) recognizes at least one portion of one of said reference contents or said free content.

4. Analysis method according to any one of Claims 1 to 3, **characterized in that** said step for assigning a likelihood probability (22) takes into account a comparison between a descriptor of said current individual entity and a descriptor of said candidate individual entity.

5. Analysis method according to any one of Claims 1 to 4, **characterized in that** said step for assigning a transition probability (23) assigns to each current candidate individual entity a probability belonging to the group comprising:

- a first transition probability ($Pc$) that said current candidate individual entity and a preceding candidate individual entity belong to one and the same reference content;
- a second transition probability ($P_0$) that said current candidate individual entity and a preceding candidate individual entity belong to different reference contents;
- a third transition probability ($Pnc$) that said current candidate individual entity belongs to a free content, not referenced in said reference base, and a preceding candidate individual entity belongs to a reference content;
- a fourth transition probability ($Pcnc$) that said current candidate individual entity and a preceding candidate individual entity belong to a free content, not referenced in said reference base;
- a fifth transition probability that said current candidate individual entity belongs to a reference content and a preceding candidate individual entity belongs to a free content, not referenced in said reference base.

6. Analysis method according to Claim 5, **characterized in that** said first transition probability is greater than or equal to said third transition probability, which is in turn greater than or equal to said second transition probability.

7. Analysis method according to any one of Claims 1 to 6, **characterized in that** said scenarios are represented in the form of a tree associating all the preceding candidate individual entities with each of the current candidate individual entities,
said step for assigning a likelihood probability (22) assigning a likelihood probability to each of the nodes of the tree, and
said step for assigning a transition probability (23) assigning a transition probability to each branch of the tree.

8. Analysis method according to any one of Claims 1 to 7, **characterized in that** it comprises a step for selecting a subset of the most probable scenarios.

9. Analysis method according to Claim 8, **characterized in that** said selection step selects the scenarios that have an identification probability above a predetermined threshold.

10. Analysis method according to Claim 8, **characterized in that** said selection step selects the N scenarios that have the highest identification probabilities, with N being a positive integer.

11. Analysis method according to Claim 7, and any one of Claims 8 to 10, **characterized in that** said step for deciding to recognize (25) recognizes a portion of one of said reference contents or of a free content, not referenced in said reference base, when the corresponding part of said tree comprises a single branch.

12. Computer software product which can be downloaded from a communication network and/or stored on a computer-readable medium and/or which can be executed by a processor, **characterized in that** it comprises program code instructions for implementing the analysis method according to at least one of Claims 1 to 11.

13. Device for analysing a multimedia content, consisting of a temporal succession of individual entities, making it possible to verify whether said multimedia content includes or does not include at least one portion of at least one reference content referenced in a reference content base,
comprising, for at least one individual entity of the multimedia content to be analysed selected according to a predetermined selection rule, called current individual entity, means for assigning a likelihood probability (22) to each individual entity of a set of current candidate individual entities, said likelihood probability taking into account a similarity between said candidate individual entity and said current individual entity of said multimedia content;
**characterized in that** it also comprises:

- means for assigning a transition probability (23) between said current candidate individual entity or entities and at least one preceding candidate individual entity;
- means for assigning an identification probability (24) to at least one scenario consisting of a temporal succession of candidate individual entities, taking into account:

• the likelihood probabilities assigned to the candidate individual entities of said scenario; and
• the transition probabilities assigned to the candidate individual entities of said scenario;

- means for deciding to recognize (25) one of said reference contents and/or to continue the analysis using a subsequent individual entity of said multimedia content, according to said identification probability.

**Patentansprüche**

1. Verfahren zur Analyse eines Multimedia-Inhalts, der aus einer zeitlichen Folge von Elementareinheiten besteht, mit dem Ziel, zu überprüfen, ob der Multimedia-Inhalt mindestens einen Abschnitt mindestens eines Bezugsinhalts enthält oder nicht, auf den in einer Bezugsinhaltsbasis hingewiesen wird,
das für mindestens eine Elementareinheit des zu analysierenden Multimedia-Inhalts, die gemäß einer vorbestimmten Auswahlregel ausgewählt wird, laufende Elementareinheit genannt, einen Schritt der Zuweisung einer Likelihood-Wahrscheinlichkeit (22) zu jeder Elementareinheit einer Einheit von laufenden Kandidat-Elementareinheiten durchführt, wobei die Likelihood-Wahrscheinlichkeit eine Ähnlichkeit zwischen der Kandidat-Elementareinheit und der laufenden Elementareinheit des Multimedia-Inhalts berücksichtigt;
**dadurch gekennzeichnet, dass** es ebenfalls die folgenden Schritte durchführt:

- Zuweisung einer Übergangswahrscheinlichkeit (23) zwischen der oder den laufenden Kandidat-Elementareinheiten und mindestens einer vorhergehenden Kandidat-Elementareinheit;
- Zuweisung einer Identifikationswahrscheinlichkeit (24) zu mindestens einem Szenario, das aus einer zeitlichen Folge von Kandidat-Elementareinheiten besteht, die berücksichtigt:

• Likelihood-Wahrscheinlichkeiten, die den Kandidat-Elementareinheiten des Szenarios zugewiesen sind; und
• Übergangswahrscheinlichkeiten, die den Kandidat-Elementareinheiten des Szenarios zugewiesen sind;

- Entscheidung der Erkennung (25) eines der Bezugsinhalte und/oder des Fortsetzens der Analyse mit Hilfe einer folgenden Elementareinheit des Multimedia-Inhalts, abhängig von der Identifikationswahrscheinlichkeit.

2. Analyseverfahren nach Anspruch 1, **dadurch gekennzeichnet, dass** die Kandidat-Elementareinheiten zu der Gruppe gehören, die enthält:

- eine Elementareinheit, die zu einem der Bezugsinhalte gehört, und
- eine Elementareinheit, die für einen so genannten "freien" Inhalt repräsentativ ist, auf den in der Bezugsbasis nicht hingewiesen wird.

3. Analyseverfahren nach Anspruch 2, **dadurch gekennzeichnet, dass** der Schritt der Entscheidung der Erkennung (25) mindestens einen Abschnitt eines der Bezugsinhalte oder den freien Inhalt erkennt.

4. Analyseverfahren nach einem der Ansprüche 1 bis 3, **dadurch gekennzeichnet, dass** der Schritt der Zuweisung einer Likelihood-Wahrscheinlichkeit (22) einen Vergleich zwischen einem Deskriptor der laufenden Elementareinheit und einem Deskriptor der Kandidat-Elementareinheit berücksichtigt.

5. Analyseverfahren nach einem der Ansprüche 1 bis 4, **dadurch gekennzeichnet, dass** der Schritt der Zuweisung einer Übergangswahrscheinlichkeit (23) jeder laufenden Kandidat-Elementareinheit eine Wahrscheinlichkeit zuweist, die zu der Gruppe gehört, die enthält:

- eine erste Übergangswahrscheinlichkeit (Pc), dass die laufende Kandidat-Elementareinheit und eine vorhergehende Kandidat-Elementareinheit zu einem gleichen Bezugsinhalt gehören;
- eine zweite Übergangswahrscheinlichkeit ($P_0$), dass die laufende Kandidat-Elementareinheit und eine vorhergehende Kandidat-Elementareinheit zu unterschiedlichen Bezugsinhalten gehören;
- eine dritte Übergangswahrscheinlichkeit (Pnc), dass die laufende Kandidat-Elementareinheit zu einem freien Inhalt gehört, auf den in der Bezugsbasis nicht hingewiesen wird, und eine vorhergehende Kandidat-Elementareinheit zu einem Bezugsinhalt gehört;
- eine vierte Übergangswahrscheinlichkeit (Pcnc), dass die laufende Kandidat-Elementareinheit und eine vorhergehende Kandidat-Elementareinheit zu einem freien Inhalt gehören, auf den in der Bezugsbasis nicht hingewiesen wird;
- eine fünfte Übergangswahrscheinlichkeit, dass die laufende Kandidat-Elementareinheit zu einem Bezugsinhalt gehört, und eine vorhergehende Kandidat-Elementareinheit zu einem freien Inhalt gehört, auf den in der Bezugsbasis nicht hingewiesen wird.

6. Analyseverfahren nach Anspruch 5, **dadurch gekennzeichnet, dass** die erste Übergangswahrscheinlichkeit höher als die oder gleich der dritten Übergangswahrscheinlichkeit ist, die selbst höher als die oder gleich der zweiten Übergangswahrscheinlichkeit ist.

7. Analyseverfahren nach einem der Ansprüche 1 bis 6, **dadurch gekennzeichnet, dass** die Szenarien in Form eines Baums dargestellt sind, der jeder der laufenden Kandidat-Elementareinheiten die Gesamtheit der vorhergehenden Kandidat-Elementareinheiten zuordnet,
wobei der Schritt der Zuweisung einer Likelihood-Wahrscheinlichkeit (22) jedem der Knoten des Baums eine Likelihood-Wahrscheinlichkeit zuweist, und der Schritt der Zuweisung einer Übergangswahrscheinlichkeit (23) jedem der Zweige des Baums eine Übergangswahrscheinlichkeit zuweist.

8. Analyseverfahren nach einem der Ansprüche 1 bis 7, **dadurch gekennzeichnet, dass** es einen Schritt der Auswahl einer Untereinheit von wahrscheinlichsten Szenarien enthält.

9. Analyseverfahren nach Anspruch 8, **dadurch gekennzeichnet, dass** der Auswahlschritt die Szenarien auswählt, die eine höhere Identifikationswahrscheinlichkeit als eine vorbestimmte Schwelle haben.

10. Analyseverfahren nach Anspruch 8, **dadurch gekennzeichnet, dass** der Auswahlschritt die N Szenarien auswählt, die die höchsten Identifikationswahrscheinlichkeiten haben, wobei N eine positive ganze Zahl ist.

11. Analyseverfahren nach Anspruch 7 und nach einem der Ansprüche 8 bis 10, **dadurch gekennzeichnet, dass** der Schritt der Erkennungsentscheidung (25) einen Abschnitt eines der Bezugsinhalte oder eines freien Inhalts erkennt, auf den in der Bezugsbasis nicht hingewiesen wird, wenn der entsprechende Teil des Baums einen einzigen Zweig enthält.

12. Computerprogrammprodukt, das von einem Kommunikationsnetz heruntergeladen und/oder auf einem computerlesbaren Träger aufgezeichnet und/oder von einem Prozessor ausgeführt werden kann, **dadurch gekennzeichnet, dass** es Programmcodeanweisungen zur Durchführung des Analyseverfahrens nach mindestens einem der Ansprüche 1 bis 11 enthält.

13. Vorrichtung zur Analyse eines Multimedia-Inhalts, der aus einer zeitlichen Folge von Elementareinheiten besteht, die es ermöglicht, zu überprüfen, ob der Multimedia-Inhalt mindestens einen Abschnitt mindestens eines Bezugsinhalts enthält oder nicht, auf den in einer Bezugsinhaltbank hingewiesen wird,
die für mindestens eine Elementareinheit des zu analysierenden Multimedia-Inhalts, die gemäß einer vorbestimmten Auswahlregel ausgewählt wird, laufende Elementareinheit genannt, Einrichtungen zur Zuweisung einer Likelihood-Wahrscheinlichkeit (22) zu jeder Elementareinheit einer Einheit von laufenden Kandidat-Elementareinheiten enthält, wobei die Likelihood-Wahrscheinlichkeit eine Ähnlichkeit zwischen der Kandidat-Elementareinheit und der laufenden Elementareinheit des Multimedia-Inhalts berücksichtigt;
**dadurch gekennzeichnet, dass** sie ebenfalls enthält:

- Einrichtungen zur Zuweisung einer Übergangswahrscheinlichkeit (23) zwischen der oder den laufenden Kandidat-Elementareinheiten und mindestens einer vorhergehenden Kandidat-Elementareinheit;
- Einrichtungen zur Zuweisung einer Identifikationswahrscheinlichkeit (24) zu mindestens einem Szenario, das aus einer zeitlichen Folge von Kandidat-Elementareinheiten besteht, die berücksichtigen:

• Likelihood-Wahrscheinlichkeiten, die den Kandidat-Elementareinheiten des Szenarios zugewiesen sind; und
• Übergangswahrscheinlichkeiten, die den Kandidat-Elementareinheiten des Szenarios zugewiesen sind;

- Einrichtungen zur Entscheidung der Erkennung (25) eines der Bezugsinhalte und/oder des Fortsetzens der Analyse mit Hilfe einer folgenden Elementareinheit des Multimedia-Inhalts, abhängig von der Identifikationswahrscheinlichkeit.

11

13

14

15

12

161

16

162

17

Fig. 1

20

21

Ik

22

23

Ik+1

24

25

Fig. 2

Fig. 4A

Fig. 4B

Fig. 3

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. Joly et al.** Statistical similarity search applied to content-based video copy detection. *21st International Conference on Data Engineering Workshops (ICDEW'05),* 2005, 1285